# EUROPEAN PATENT APPLICATION

(11) **EP 4 715 491 A1**
(43) Date of publication of application: **25.03.2026**
(21) Application number: 24201648.3
(22) Date of filing: 20.09.2024
(51) Int. Cl.: G05B 13/02, B05C 5/02, B05C 11/10, H01M 4/04, H01M 4/139

(54) **A COMPUTER-IMPLEMENTED METHOD FOR CONTROLLING A COATING PROCESS**

(71) Applicant: Siemens Aktiengesellschaft, 80333 München (DE)
(72) Inventor: Otte, Clemens, 81739 München (DE); Heesche, Kai, 81539 München (DE); Schöner, Holger, 81739 München (DE); Mehl, Sebastian, 91074 Herzogenaurach (DE); Witt, Jonas, 90419 Nürnberg (DE)
(74) Representative: Siemens Patent Attorneys

(57) **Abstract**

The invention relates to a computer-implemented method for controlling a coating process, where the coating process applies material on several parallel tracks (T1, ..., T5) to a moving substrate (2) via a slot die (1), wherein one or more measured values (mv) are detected several times during the coating process, the one or more measured values (mv) comprising the loading of material (lm) across the tracks (T1, ..., T5) in a width direction of the substrate (2) and the widths (wt) of the respective tracks (T1, ..., T5) in the width direction of the substrate (2), and wherein one or more control values (cv) are detected several times during the coating process, the one or more control values (cv) comprising a flow rate measure (ps) of the material and gaps (gos, gds) between the slot die (1) and the substrate (2) at opposite ends of the substrate (2) in the width direction of the substrate (2), the method comprising the following steps:
- feeding the one or more control values (cv) as having been detected at least at a current time point and the one or more measured values (lm, wt) as having been detected at least at the current time point to a controller (CO) comprising one or more trained data driven models (LSM, WSM, SSM, PM), where the controller (CO) determines, using the one or more trained data driven models (LSM, WSM, SSM, PM), one or more optimized control values (cv') based on several targets (tg) including a loading target (tal) for an average loading of material (al) along the width of all tracks (T1, ..., T5) and/or of the respective tracks (T1, ..., T5) and a width target (twt) for the widths (wt) of the respective tracks (T1, ..., T5);
- automatically setting the optimized control values (cv') in the coating process.

## Description

The invention relates to a computer-implemented method for controlling a coating process.

Industrial coating processes often use slot dies to apply a thin layer of a material to a substrate. E.g. in electrode manufacturing for battery production, slurry is applied to metal foils via a slot die. To achieve a high coating consistency, the coating process must be controlled.

Key control parameters in coating processes are the flow rate of material as well as the gaps between the slot die and the substrate. Some slot dies additionally use a flexible lip, which may require further control parameters.

The coating consistency in coating processes is typically measured by sensors like web gauges or cameras. Web gauges use beta-rays or ultrasound to determine the area loading of material on the substrate. Cameras usually measure the geometry of the coated areas including the widths of the tracks of material applied to the substrate. Furthermore, cameras may detect defects in the coated areas.

Document EP 2 718 086 B1 describes a slot die adjustment in a coating process where actuators locally adjust fluid flow through an applicator slot extending about the width of the slot die. The actuators are controlled by a physics-based model.

It is an object of the invention to provide a computer-implemented method for efficiently controlling the material loading and the widths of coated tracks on a substrate in a coating process using a slot die.

This object is solved by the method according to independent claim 1. Preferred embodiments of the invention are defined in the dependent claims.

The method of the invention provides a computer-implemented control of a coating process, where the coating process applies material on several parallel tracks to a moving substrate via a slot die. Preferably, the slot die has a slot or opening which extends in a plane where only the inclination and the distance of the plane with respect to the substrate can be adjusted. During the coating process, one or more measured values are detected several times. The one or more measured values comprise the loading of material (i.e. the amount of material per surface unit on the substrate) across the tracks in a width direction of the substrate. I.e., the loading of material comprises a plurality of loading values at positions in the width direction of the substrate. The width direction of the substrate is the direction perpendicular to the moving direction of the substrate. Furthermore, the one or more measured values comprise the widths of the respective tracks in the width direction of the substrate. Moreover, one or more control values are detected several times during the coating process, the one or more control values comprising a flow rate measure of the material as well as gaps between the slot die, i.e the slot/opening of the slot die, and the substrate at opposite ends of the substrate in the width direction of the substrate. The flow rate measure may directly refer to the flow rate of material. Nevertheless, the flow rate measure may also be a quantity depending on the flow rate, e.g. the speed of the pump delivering the material to the slot die.

In the method according to the invention, the one or more control values (i.e. actual values) as having been detected at least at a current time point (i.e. the current time point and optionally one or more earlier time points) and the one or more measured values (i.e. actual values) as having been detected at least at the current time point (i.e. the current time point and optionally one or more earlier time points) are fed to a controller which comprises one or more trained data driven models (i.e. models learned by machine learning).

The controller used in the method of the invention determines, using the one or more trained data driven models, one or more optimized control values (i.e. set values) based on several targets including a loading target for an average loading of material along the width of all tracks and/or the respective tracks and a width target for the width of the respective tracks. The optimized control values are automatically set in the coating process.

The method of the invention uses an Al-based control (Al = Artificial Intelligence) by implementing one or more trained data driven models in a controller. Based on suitable targets for the average loading of material and for the widths of the tracks, a reliable adjustment of the control values in the form of the flow rate measure and the gaps between the slot die and the substrate can be achieved.

In a particularly preferred embodiment, the method of the invention controls a coating process for battery electrodes. In such a coating process, the substrate is a metal foil and the material is slurry being applied to the metal foil.

In another preferred embodiment, the control values comprise the temperature of the material and/or the moving speed of the substrate. The temperature of the material may be detected at different positions, e.g. the temperature of the material in a supply tank may be detected.

In another variant of the invention, the several targets include a slope target being a value of zero for the slope of a linear fit on aggregates of loading of material on the respective tracks along the width of the substrate. An aggregate may be any suitable quantity derived from the loading of material. E.g., the aggregate may refer to the mean loading, the median loading, or the maximum loading on the respective tracks. The term target shall be interpreted broadly. A target may e.g. refer to a target value or a range of target values for the average loading of material and/or the widths of the respective tracks and/or the slope.

In a preferred embodiment, the slope target is only included in the several targets in case that a quality measure of the linear fit, particularly the well known R² score, exceeds a predetermined quality threshold and the slope of the linear fit exceeds a predetermined slope threshold. This embodiment is based on the finding that a slope adjustment during the coating process is only necessary in case that the slope significantly differs from zero and that the loading of material on the respective tracks indeed shows a linear trend.

In another preferred embodiment, the one or more trained data driven models comprise a first data driven model and a second data driven model. The first data driven model predicts for a future time point after the current time point a change of the average loading of material along the width of all tracks and/or the respective tracks in dependence on process changes comprising a change of the flow rate measure and a change of the mean of the gaps between the slot die and the substrate at opposite ends of the substrate. Contrary to that, the second data driven model predicts for a future time point after the current time point a change of the width of the respective tracks in dependence on process changes comprising a change of the flow rate measure and a change of the gaps between the slot die and the substrate at opposite ends of the substrate.

Furthermore, in the above embodiment, the one or more optimized control values are determined by an optimizer which uses a cost function prioritizing a predicted change of the average loading of material along the width of all tracks and/or the respective tracks which result in a predicted average loading of material along the width of all tracks and/or the predicted tracks with low deviation from the loading target and prioritizing a predicted change of the width of the respective tracks which results in predicted widths of the respective tracks with low deviation from the width target.

In the embodiment as described above, the data driven models are used for predicting changes of corresponding quantities where the optimized control values are determined by searching for predicted changes in line with corresponding targets.

In another preferred embodiment using additionally the above slope target, the one or more trained data driven models comprise, besides the first and second data driven models, a third data driven model, where the third data driven model predicts for a future time point after the current time point a change of the slope of the linear fit on aggregates of loading of material on the respective tracks along the width of the substrate in dependence on process changes comprising a change of the difference between the gaps between the slot die and the substrate at opposite ends of the substrate. In this embodiment, the cost function of the optimizer additionally prioritizes a predicted change of the slope of the linear fit on aggregates of loading of material on the respective tracks along the width of the substrate which results in a predicted slope of the linear fit on aggregates of loading of material on the respective tracks with low deviation from the slope target.

In case that the control values comprise the temperature of the material and/or the moving speed of the substrate as described above, the process changes as described in the two previous embodiments preferably comprise a change of the temperature of material and/or a change of the moving speed of the substrate.

Any well-known optimizer may be used in the embodiments previously described. E.g., the optimizer may be based on a gradient descent optimization method, e.g. L-BFGS-B, or on a gradient-free optimization method, e.g. Nelder Mead, Powell, Particle Swarm Optimization, evolutionary methods and the like.

In another preferred embodiment of the method according to the invention, the cost function can be adjusted manually during the coating process. I.e., an operator can adjust corresponding parameters of the cost function in order to consider particularities of the specific coating process.

Any cost function based on the above priorities may be used in the method according to the invention. In a preferred embodiment, the cost function is a weighted sum of error terms. In case of a manually adjustable cost function, e.g. corresponding weights of the error terms in the function may be adjusted manually.

In another preferred embodiment, instead of using first, second and optionally third data driven models, the controller may comprise a single trained data driven model outputting the optimized control values in dependence on the one or more control values and the one or more measured values fed to the controller. The single data driven model may e.g. be learned on training data produced by the above controller being based on the first, second and optionally third data driven models and the corresponding optimizer.

The one or more trained data driven models may be based on different machine learning technologies. Preferably, the one or more trained data driven models comprise one or more neural networks and/or one or more support vector machines and/or one or more linear models and/or one or more random forest models and/or one or more Gaussian process models and/or one or more gradient boosting models. All those models are well known for a skilled person and thus not described in detail herein.

Besides the above method, the invention refers to a system for controlling a coating process, where the system is configured to perform a method according to the invention or one or more preferred embodiments thereof.

Furthermore, the invention refers to a computer program product with program code, which is stored on a machine-readable carrier, for carrying out a method according to the invention or one or more preferred embodiments thereof when the program code is executed on a computer.

Furthermore, the invention refers to a computer program with program code for carrying out a method according to the invention or one or more preferred embodiments thereof when the program code is executed on a computer.

In the following, embodiments of the invention will be described with respect to the accompanying drawings wherein:
- Fig. 1: is a schematic view of a coating system using an embodiment of the control method according to the invention;
- Fig. 2: is a diagram illustrating an example of the loading of material across the tracks on a substrate in a coating process; and
- Fig. 3: is a schematic view illustrating the operation of the controller used in the system of Fig. 1.

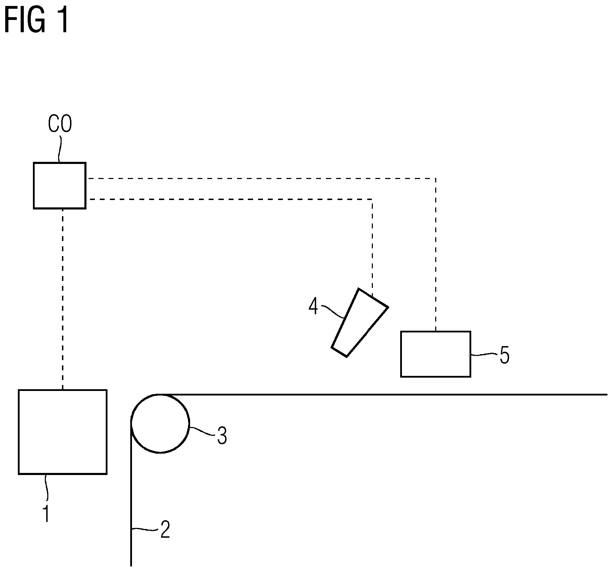

Fig. 1 schematically illustrates a coating system using a variant of the method according to the invention. In the embodiment described herein, the coating system is used to apply via a slot die material in the form of slurry to a substrate in the form of a metal foil for manufacturing battery electrodes. Nevertheless, the method according to the invention may also be used in other coating systems. The coating system of Fig. 1 comprises a slot die 1 applying the slurry to the substrate 2 being a metal foil forming the anode or the cathode of a corresponding battery. The slot die 1 has a slot located adjacent to the substrate 2 and extending across the width of the substrate.

The substrate 2 is moved during the coating process by a coating roll 3 being located adjacent to the slot die 1. The coating system further comprises a camera system 4 for measuring the width of the tracks of material applied to the substrate 2. In the embodiment described herein, five parallel tracks of material are applied to the substrate 2. However, the number of tracks may be more or less depending on the circumstances. Furthermore, the coating system comprises a so-called web gauge system 5 which measures the area loading (e.g. in mg/cm²) across the tracks. The web gauge system is e.g. based on beta-rays or ultrasound.

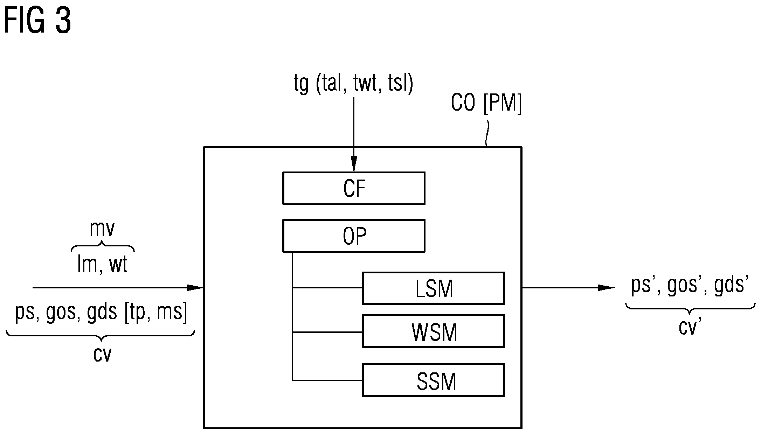

The coating system of Fig. 1 comprises a controller CO which processes control values detected during the coating process based on data driven models as will be described below. The control values comprise the pump speed of a corresponding pump (not shown) delivering the slurry to the slot of the slot die. The pump speed is an example of a flow rate measure of the material in the sense of patent claim 1. Furthermore, the control values comprise the gaps between the slot die 1 (i.e. the slot of the die) and the substrate 2 on opposite sides of the substrate in its width direction. In Fig. 1, the width direction of the substrate 2 and the corresponding tracks on the substrate extends perpendicular to the plane of the drawing. Based on the control values, the controller CO determines optimized control values which are automatically set in the coating process. This will be described in more detail with respect to Fig. 3.

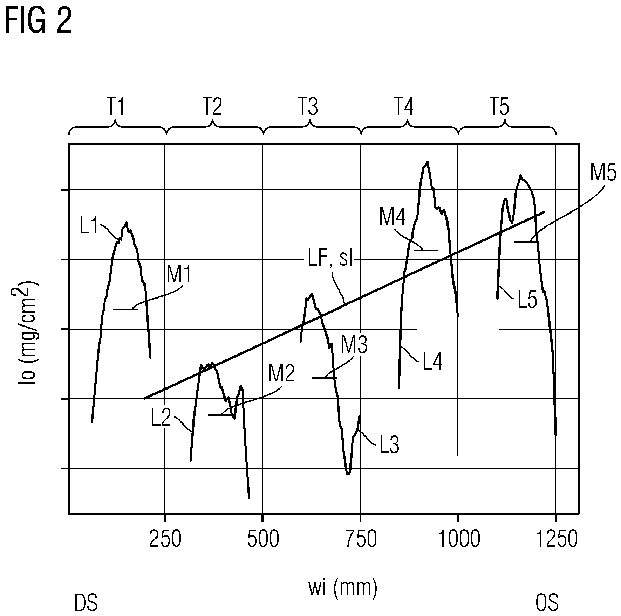

Fig. 2 shows a diagram illustrating an example of the area loading of material applied to the substrate 2 in the width direction of the substrate. Reference numerals DS (DS = distant side) and OS (OS = operator side) indicate opposite ends of the substrate 2 along its width direction. The abscissa of the diagram of Fig. 2 indicates width values wi of the substrate in mm. The ordinate of the diagram indicates values lo of loading of material across the tracks on the substrate (in mg/cm²). As can be seen from Fig. 2, there are five parallel tracks of materials T1, T2, T3, T4 and T5 on the substrate. The loading of material across the respective tracks is indicated by curves of loading L1, L2, L3, L4 and L5. The curve L1 corresponds to the material loading across track T1, the curve L2 to the material loading across the track T2, the curve L3 to the material loading across the track T3, the curve L4 to the material loading across the track T4 and the curve L5 to the material loading across the track T5. Furthermore, median values Mx (x = 1, ... , 5) for the material loading across the corresponding tracks Tx (x = 1, ..., 5) are indicated as horizontal bars in Fig. 2. Moreover, a linear fit LF of those medians having a slope sl is shown in the diagram of by Fig. 2. The linear fit LF is processed in an embodiment of the invention as will be described below.

Fig. 3 illustrates the operation of the controller CO shown in Fig. 1. The controller CO receives as input variables the above mentioned control values cv, namely the pump speed ps, the gap gos between the slot die 1 and the substrate 2 on the operator side OS of the substrate and the gap gds between the slot die 1 and the substrate 2 on the distant side DS of the substrate. Based on corresponding actuators (not shown), the pump speed ps as well as the gaps gos and gds can be adjusted. Optionally, the control values cv may also comprise the temperature tp of the material as well as a moving speed ms of the substrate. The temperature tp may e.g. refer to the temperature of the material in a supply tank.

Besides the control values cv, the controller CO receives measured values mv. The measured values mv comprise the loading of material lm at a plurality of positions across the tracks T1 to T5 in the width direction of the substrate as illustrated in Fig. 2. Furthermore, the measured values mv comprise the widths of the respective tracks T1 to T5 as shown in Fig. 2. The values cv and mv refer to actual values being detected at a current time point of the coating process. Additionally, the values cv and mv may also comprise historic values being detected before the current time.

The controller CO comprises three data driven models, i.e. models having been learned by machine learning. Particularly, the data driven models comprise a first data driven model in the form of a loading surrogate model LSM, a second data driven model in the form of a width surrogate model WSM and a third data driven model in the form of a slope surrogate model SSM. The loading surrogate model LSM predicts for a future time point a change of the average loading of material along the width of all tracks in dependence on process changes comprising a change of the pump speed ps and a change of the mean of the gaps gos and gds. The width surrogate model WSM predicts for a future time point a change of the widths of the respective tracks in dependence on process changes comprising a change of the pump speed ps and a change of the gaps gos and gds. The slot surrogate model SSM predicts for a future time point a change of the slope sl of the linear fit LF shown in Fig. 2 in dependence on process changes comprising a change of the difference between the gaps gos and gds.

The predictions of the data driven models LSM, WSM and SSM are processed by an optimizer OP implemented in the controller CO. The optimizer OP uses a cost function CF which depends on targets tg. The targets tg comprise a loading target tal being a target value for the average loading of material along the widths of all tracks. Furthermore, the targets tg comprise a width target twt for the widths of the respective tracks as well as a slope target tsl being a value of zero for the slope sl of the linear fit LF shown in Fig. 2. The cost function CF prioritizes a predicted change of the average loading of material along the widths of all tracks which result in a predicted average loading of material along the widths of all tracks with low deviation from the loading target tal. Furthermore, the cost function prioritizes a predicted change of the widths of the respective tracks which results in predicted widths of the respective tracks with low deviation from the width target twt. Moreover, the cost function CF prioritizes a predicted change of the slope sl of the linear fit LF shown in Fig. 2 which results in a predicted slope of the linear fit with low deviation from the slope target tsl. A well known cost function may be used in the controller CF, e.g. a weighted sum of the deviations between the predicted values and the corresponding targets.

In the embodiment described herein, the slope surrogate model SSM is only used in the control performed by the controller CO in case that a first condition and a second condition are met. According to the first condition, the slope sl of the linear fit LF shown in Fig. 2 exceeds a predetermined threshold. According to the second condition, the well known statistical R² score being a measure of the quality of the linear fit LF exceeds a predetermined slope threshold. If those conditions are not met, the slope sl of the linear fit LF is very low and/or a linear trend is not present, so that a slope adjustment is not appropriate.

The optimizer OP may be based on any well-known prior art optimization method, e.g. a gradient descent optimization or a gradient-free optimization. Analogously, the data driven models LSM, WSM and SSM may be any known machine learning model. In a preferred embodiment, the data driven models LSM, WSM and SSM refer to neural networks.

The optimizer OP determines optimized control values cv', namely an optimized pump speed ps' and optimized gaps gos' and gds'. Those optimized values form set values, i.e. those values are automatically set in the coating process. The controller CO operates continuously, i.e. optimized control values cv' are determined continuously at subsequent time points during the coating process.

Instead of using the data driven models LSM, WSM and SSM in combination with the optimizer OP, a so called policy model PM may be implemented in the controller CO. In other words, the optimizer OP and the data driven models LSM, WSM and SSM may be substituted by a single policy model PM which directly outputs the optimized control values cv' based on the values cv and mv fed to the controller. This embodiment has the advantage that an optimization problem need not be solved in every control cycle so that the control is faster and can run on simpler hardware. For training the policy model PM, corresponding training data generated by the optimizer OP and the data driven models LSM, WSM and SSM may be used.

The method as described in the foregoing has several advantages. Particularly, an Al-based controller based on corresponding data driven models is used in a coating process so that no physical model of the slot die or process is required. System dynamics can be learned from operational data. Even step-response tests, usually required for designing a conventional controller, are not strictly necessary. Furthermore, the modular approach with the above surrogate models can be scaled towards the available data and required complexity. If only a few coating episodes are available for training, less complex models can be chosen.

The above cost function may be defined as appropriate and combines different sub-problem. To do so, e.g. a weighted sum of corresponding deviations from the targets may be used. Furthermore, the controller may allow a user to change the weights in the cost function online during the coating process. Moreover, the method as described above determines whether a slope adjustment is required or not. Avoiding slope adjustments when they are not appropriate improves the quality of the control.

### List of Reference

- 1: slot die
- 2: substrate
- 3: coating roll
- 4: camera system
- 5: web gauge system
- CO: controller
- T1, T2, T3, T4, T5: tracks
- L1, L2, L3, L4, L5: curves of loading of material across the tracks
- M1, M2, M3, M4, M5: median loadings of material per track
- LF: linear fit
- sl: slope of linear fit
- DS: distant side
- OS: operator side
- lo: values of loading of material
- wi: values of width
- mv: measured values
- lm: loading of material across the tracks
- wt: width of the respective tracks
- cv: control values
- ps: flow rate measure of the material (pump speed)
- gos: gap at operator side of the substrate
- gds: gap at distant side of the substrate
- tp: temperature of the material
- ms: moving speed of the substrate
- cv': optimized control values
- ps': optimized flow rate measure (pump speed)
- gos': optimized gap at operator side of the substrate
- gds': optimized gap at distant side of the substrate
- tg: targets
- tal: loading target
- twt: width target
- tsl: slope target
- CF: cost function
- OP: optimizer
- LSM: loading surrogate model
- WSM: width surrogate model
- SSM: slope surrogate model
- PM: policy model

## Claims

1. A computer-implemented method for controlling a coating process, where the coating process applies material on several parallel tracks (T1, ..., T5) to a moving substrate (2) via a slot die (1), wherein one or more measured values (mv) are detected several times during the coating process, the one or more measured values (mv) comprising the loading of material (lm) across the tracks (T1, ..., T5) in a width direction of the substrate (2) and the widths (wt) of the respective tracks (T1, ..., T5) in the width direction of the substrate (2), and wherein one or more control values (cv) are detected several times during the coating process, the one or more control values (cv) comprising a flow rate measure (ps) of the material and gaps (gos, gds) between the slot die (1) and the substrate (2) at opposite ends of the substrate (2) in the width direction of the substrate (2), the method comprising the following steps:
- feeding the one or more control values (cv) as having been detected at least at a current time point and the one or more measured values (lm, wt) as having been detected at least at the current time point to a controller (CO) comprising one or more trained data driven models (LSM, WSM, SSM, PM), where the controller (CO) determines, using the one or more trained data driven models (LSM, WSM, SSM, PM), one or more optimized control values (cv') based on several targets (tg) including a loading target (tal) for an average loading of material (al) along the width of all tracks (T1, ..., T5) and/or of the respective tracks (T1, ..., T5) and a width target (twt) for the widths (wt) of the respective tracks (T1, ..., T5);
- automatically setting the optimized control values (cv') in the coating process.

2. The method according to claim 1, wherein the coating process is a coating process for battery electrodes, the substrate (2) being a metal foil and the material being slurry.

3. The method according to claim 1 or 2, wherein the control values (cv) comprise the temperature (tp) of the material and/or the moving speed (ms) of the substrate (2).

4. The method according to one of the preceding claims, wherein the several targets (tg) include a slope target (tsl) being a value of zero for the slope (sl) of a linear fit (LF) on aggregates of loading of material on the respective tracks (T1, T2, T3, T4, T5) along the width of the substrate (2).

5. The method according to claim 4, wherein the slope target (tsl) is only included in the several targets (tg) in case that a quality measure of the linear fit (LF), particularly the R² score, exceeds a predetermined quality threshold and the slope (sl) of the linear fit (LF) exceeds a predetermined slope threshold.

6. The method according to one of the preceding claims, wherein
- the one or more trained data driven models (LSM, WSM, SSM, PM) comprise a first data driven model (LSM) and a second data driven model (WSM), where the first data driven model (LSM) predicts for a future time point after the current time point a change of the average loading of material along the widths of all tracks (T1, ..., T5) and/or of the respective tracks (T1, ..., T5) in dependence on process changes comprising a change of the flow rate measure (ps) and a change of the mean of the gaps (gos, gds) between the slot die (1) and the substrate (2) at opposite ends of the substrate (2) and where the trained second data driven model (WSM) predicts for a future time point after the current time point a change of the widths (wt) of the respective tracks (T1, T2, T3, T4, T5) in dependence on process changes comprising a change of the flow rate measure (ps) and a change of the gaps (gos, gds) between the slot die (1) and the substrate (2) at opposite ends of the substrate (2);
- the one or more optimized control values (cv') are determined by an optimizer (OP) which uses a cost function (CF) prioritizing a predicted change of the average loading of material along the widths of all tracks (T1, ..., T5) and/or of the respective tracks (T1, ..., T5) which results in a predicted average loading of material along the widths of all tracks (T1, ..., T5) and/or of the respective tracks (T1, ..., T5) with low deviation from the loading target (tal) and prioritizing a predicted change of the widths (wt) of the respective tracks (T1, ..., T5) which results in predicted widths (wt) of the respective tracks (T1, ..., T5) with low deviation from the width target (twt).

7. The method according to claim 6 in combination with claim 4, wherein the one or more trained data driven models (LSM, WSM, SSM, PM) comprise a third data driven model (SSM), where the third data driven model (SSM) predicts for a future time point after the current time point a change of the slope (sl) of the linear fit (LF) on aggregates of loading of material on the respective tracks (T1, T2, T3, T4, T5) along the width of the substrate (2) in dependence on process changes comprising a change of the difference between the gaps (gos, gds) between the slot die (1) and the substrate (2) at opposite ends of the substrate (2), where the cost function (CF) of the optimizer (OP) prioritizes a predicted change of the slope (sl) of the linear fit (LF) on aggregates of loading of material on the respective tracks (T1, T2, T3, T4, T5) along the width of the substrate (2) which results in a predicted slope (sl) of the linear fit (LF) on aggregates of loading of material on the respective tracks (T1, T2, T3, T4, T5) with low deviation from the slope target (tsl).

8. The method according to claim 6 or 7 in combination with claim 3, wherein the process changes comprise a change of the temperature (tp) of the material and/or a change of the moving speed (ms) of the substrate (2).

9. The method according to one of claims 6 to 8, wherein the optimizer (OP) is based on a gradient descent optimization method or a gradient-free optimization method

10. The method according to one of claims 6 to 9, where the cost function (CF) can be adjusted manually during the coating process.

11. The method according to one of claims 1 to 5, wherein the controller (CO) comprises a single trained data driven model (PM) outputting the optimized control values (cv') in dependence on the one or more control values (cv) and the one or more measured values (mv) fed to the controller (CO).

12. The method according to one of the preceding claims, wherein the one or more trained data driven models (LSM, WSM, SSM, PM) comprise one or more neural networks and/or one or more support vector machines and/or one or more linear models and/or one or more random forest models and/or one or more Gaussian process models and/or one or more gradient boosting models.

13. A system for controlling a coating process, where the system is configured to perform a method according to one of the preceding claims.

14. A computer program product with program code, which is stored on a machine-readable carrier, for carrying out a method according to one of claims 1 to 12 when the program code is executed on a computer.

15. A computer program with program code for carrying out a method according to one of claims 1 to 12 when the program code is executed on a computer.
